# EUROPÄISCHE PATENTSCHRIFT

(11) **EP 2 117 894 B1**
(45) Veröffentlichungstag und Bekanntmachung des Hinweises auf die Patenterteilung: **10.10.2018**
(21) Anmeldenummer: 07729458.5
(22) Anmeldetag: 23.05.2007
(51) Int. Cl.: B60T 7/04, B60T 8/40, B60T 13/52, B60T 8/44

(54) **BREMSKRAFTVERSTÄRKER**
SERVO BRAKE
SERVOFREIN

(30) Priorität: 03.02.2007 DE 102007005459
(43) Veröffentlichungstag der Anmeldung: 18.11.2009
(73) Patentinhaber: Continental Teves AG & Co. OHG, 60488 Frankfurt am Main (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); SELLINGER, Thomas, 63073 Offenbach (DE); MILISIC, Lazar, 65779 Kelkheim (DE)
(86) Internationale Anmeldenummer: PCT/EP2007/055025
(87) Internationale Veröffentlichungsnummer: WO 2008/095546

(56) Entgegenhaltungen:
- EP-A2- 0 417 945
- WO-A-2005/014351
- WO-A-2006/111393
- DE-C1- 4 208 496
- US-A1- 2006 185 464
- US-B1- 6 609 438

## Beschreibung

Die Erfindung betrifft einen Bremskraftverstärker für eine Kraftfahrzeugbremsanlage vom Typ "Brake-by-wire", der einerseits mittels eines Bremspedals und andererseits fahrerwunschabhängig sowie unabhängig vom Fahrerwillen mittels einer elektronischen Steuereinheit betätigbar ist, wobei die Ankopplung des Bremspedals oder eines mit dem Bremspedal fest verbundenen Kraftübertragungsteil an einem Eingangsglied des Bremskraftverstärkers derart ausgeführt ist, dass eine begrenzte Relativbewegung des Bremspedals bzw. des mit dem Bremspedal fest verbundenen Kraftübertragungsteiles gegenüber dem Eingangsglied möglich ist, wodurch insbesondere in der Betriebsart "Brake-by-wire" eine Entkopplung der kraftübertragenden Verbindung zwischen dem Bremspedal oder dem mit dem Bremspedal fest verbundenen Kraftübertragungsteil gewährleistet wird.

Ein derartiger Bremskraftverstärker ist aus der europäischen Patentschrift EP 0 417 945 B1 bekannt. Eine das Eingangsglied des vorbekannten Bremskraftverstärkers bildende Kolbenstange weist eine Längsöffnung auf, die einen mit einem Bremspedal fest verbundenen Bolzen aufnimmt. Die Längsöffnung ermöglicht eine begrenzte Relativbewegung des Eingangsgliedes gegenüber dem Bolzen bzw. dem Bremspedal, so dass bei einer Verwendung des Bremskraftverstärkers in einem Antriebsschlupfregelfall bzw. bei einer vom Fahrerwillen unabhängigen Ansteuerung des Bremskraftverstärkers sich das Eingangsglied in der Betätigungsrichtung bewegt, während das Bremspedal stehen bleibt. Durch die zwischen dem Eingangsglied und dem Bolzen auftretende hohe Reibung werden ein hoher Verschleiß der genannten Teile und deren Korrosion sowie Geräusche verursacht, die vom Fahrzeugführer als unangenehm und störend empfunden werden. Ein weiteres zu dem Stand der Technik gehörendes Beispiel ist in Dokument US 6 609 438 B1 offenbart.

Es ist daher Aufgabe der vorliegenden Erfindung, einen Bremskraftverstärker der eingangs genannten Gattung dahingehend zu verbessern, dass die oben aufgeführten Nachteile weitest gehend vermieden werden.

Diese Aufgabe wird erfindungsgemäß durch einen Bremskraftverstärker mit der Merkmalskombination nach Anspruch 1 gelöst.

Vorteilhafte Weiterbildungen des Erfindungsgegenstandes sind in den Unteransprüchen 2 bis 13 aufgeführt.

Weitere Merkmale und Vorteile der Erfindung gehen aus der nachfolgenden Beschreibung von zehn Ausführungsbeispielen unter Bezugnahme auf die beiliegende Zeichnung hervor. In der Zeichnung zeigen:
Fig. 1 eine Betätigungseinheit einer Kraftfahrzeugbremsanlage vom Typ "Brake-by-wire" mit einem erfindungsgemäßen Bremskraftverstärker in einer dreidimensionalen Darstellung;
Fig. 2a, b eine Seitenansicht bzw. eine Vorderansicht einer ersten Ausführung des Erfindungsgegenstandes;
Fig. 3a, b eine Seitenansicht bzw. eine Vorderansicht einer zweiten Ausführung des Erfindungsgegenstandes;
Fig. 4a, b eine Seitenansicht bzw. eine Draufsicht einer dritten Ausführung des Erfindungsgegenstandes;
Fig. 5 eine Seitenansicht einer vierten Ausführung des Erfindungsgegenstandes;
Fig. 6a, b eine Seitenansicht bzw. eine Vorderansicht einer fünften Ausführung des Erfindungsgegenstandes;
Fig. 7a, b dreidimensionale Darstellungen einer sechsten Ausführung des Erfindungsgegenstandes;
Fig. 8a, 8b und 8c zwei dreidimensionale Darstellungen sowie eine Detaildarstellung von Gleitschuhen einer siebten Ausführung des Erfindungsgegenstandes;
Fig. 9a, 9b und 9c zwei dreidimensionale Darstellungen sowie eine Explosionsdarstellung eines Gleitschuhs, eines Dämpfungselementes sowie eines Halteteils einer achten Ausführung des Erfindungsgegenstandes;
Fig. 10 eine dreidimensionale Darstellung einer neunten Ausführung des Erfindungsgegenstandes, und
Fig. 11a, 11b und 11c eine dreidimensionale Darstellung, eine Draufsicht sowie eine Detaildarstellung von Gleitsteinen einer zehnten Ausführung des Erfindungsgegenstandes.

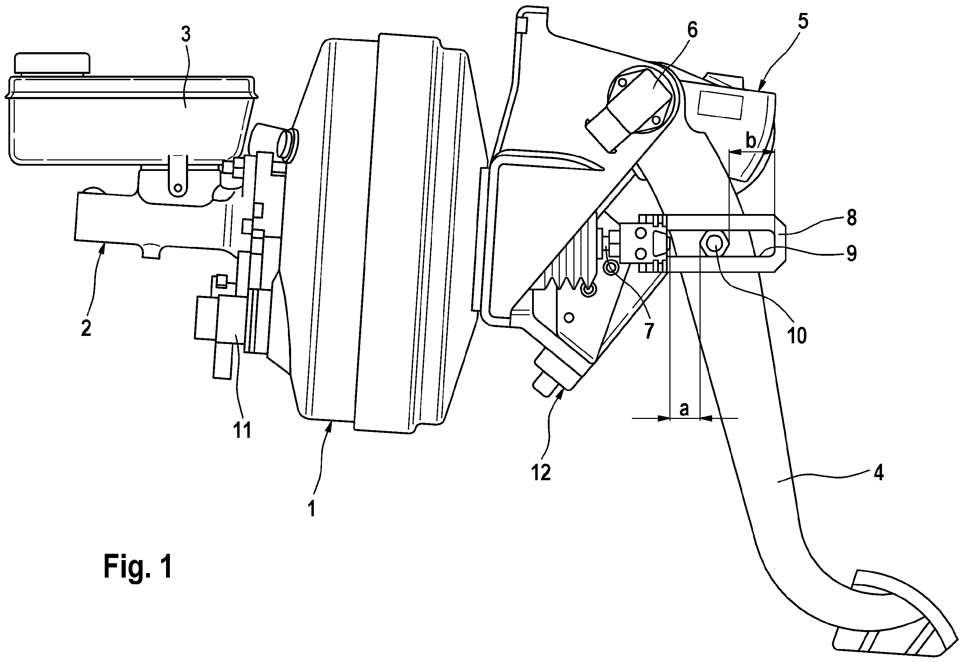

Die in Fig. 1 dargestellte Betätigungseinheit besteht aus einem Bremskraftverstärker, vorzugsweise einem Unterdruckbremskraftverstärker 1, einem dem Bremskraftverstärker 1 nachgeschalteten Hauptbremszylinder, vorzugsweise einem Tandemhauptzylinder 2, an dessen nicht dargestellte Druckräume unter Zwischenschaltung einer ebenfalls nicht dargestellten hydraulischen Steuer- und Regeleinheit Radbremsen des Kraftfahrzeuges angeschlossen sind, sowie einem dem Hauptbremszylinder 2 zugeordneten Druckmittelvorratsbehälter 3. Der Betätigung des Bremskraftverstärkers 1 durch den Fahrer dient ein Bremspedal 4, wobei ein mit dem Bremspedal 4 insbesondere in der Betriebsart "Brake-by-wire" zusammenwirkender, lediglich angedeuteter Pedalwegsimulator 5 vorgesehen ist, der dem Fahrer das gewöhnliche Bremspedalgefühl vermittelt. Ein Fahrerverzögerungswunsch bzw. der Betätigungsweg des Bremspedals 4 wird mittels mindestens einer Sensoreinrichtung 6 erfasst, deren Signale einer nicht gezeigten elektronischen Steuereinheit zugeführt werden. Durch die Ausgangssignale der elektronischen Steuereinheit ist u. a. ein dem Bremskraftverstärker 1 zugeordneter Elektromagnet ansteuerbar, der eine vom Fahrerwillen unabhängige Betätigung eines pneumatischen Steuerventils ermöglicht, das eine Luftzufuhr zum Bremskraftverstärker 1 steuert.

Ein mit dem Bremspedal 4 gekoppeltes Eingangsglied bzw. eine Kolbenstange 7, die der Betätigung des vorhin genannten Steuerventils durch den Fahrer dient, weist einen Kolbenstangenkopf 8 auf, in dem eine Längsöffnung 9 ausgebildet ist. Die Längsöffnung 9 nimmt ein mit dem Bremspedal 4 verbundenes Kraftübertragungsteil 10 auf, das als ein Bolzen ausgeführt ist. Dabei ist die Anordnung der genannten Teile 8, 10 derart getroffen, dass zwischen der in der Zeichnung linksseitigen Begrenzung der Längsöffnung 9 und dem Bolzen 10 ein axialer Spalt bzw. Abstand "a" vorgesehen ist, der in der Betriebsart "Brake-by-wire" eine Entkopplung der kraftübertragenden Verbindung zwischen dem Bremspedal 4 und dem Bremskraftverstärker 1 gewährleistet. Durch einen zwischen dem Bolzen 10 und der in der Zeichnung linksseitigen Begrenzung der Längsöffnung 9 vorgesehenen axialen Spalt bzw. Abstand "b" wird erreicht, dass bei einer vom Fahrerwillen unabhängigen Ansteuerung des Bremskraftverstärkers 1 das Bremspedal 4 nicht mit bewegt wird. Ein Wegsensor 11 dient der Erfassung des Weges einer die Verstärkungskraft des Bremskraftverstärkers 1 aufbringenden beweglichen Wand bzw. des Weges eines Ausgangsglieds des Bremskraftverstärkers 1, das seine Ausgangskraft auf einen nicht dargestellten ersten Kolben des Hauptbremszylinders 2 überträgt.

Der Pedalwegsimulator 5, durch den, wie bereits erwähnt, in der Betriebsart "Brake-by-wire" eine auf das Bremspedal 4 wirkende Rückstellkraft unabhängig von einer Betätigung des Bremskraftverstärkers 1 simulierbar ist, ist derart ausgeführt, dass er mittels einer lediglich schematisch angedeuteten Zu- und Abschalteinrichtung 12 in der Betriebsart "Brake-by-wire" bei der Entkopplung der kraftübertragenden Verbindung zwischen dem Bremspedal 4 und dem Bremskraftverstärker 1 zuschaltbar und außerhalb der Betriebsart "Brake-by-wire" abschaltbar ist.

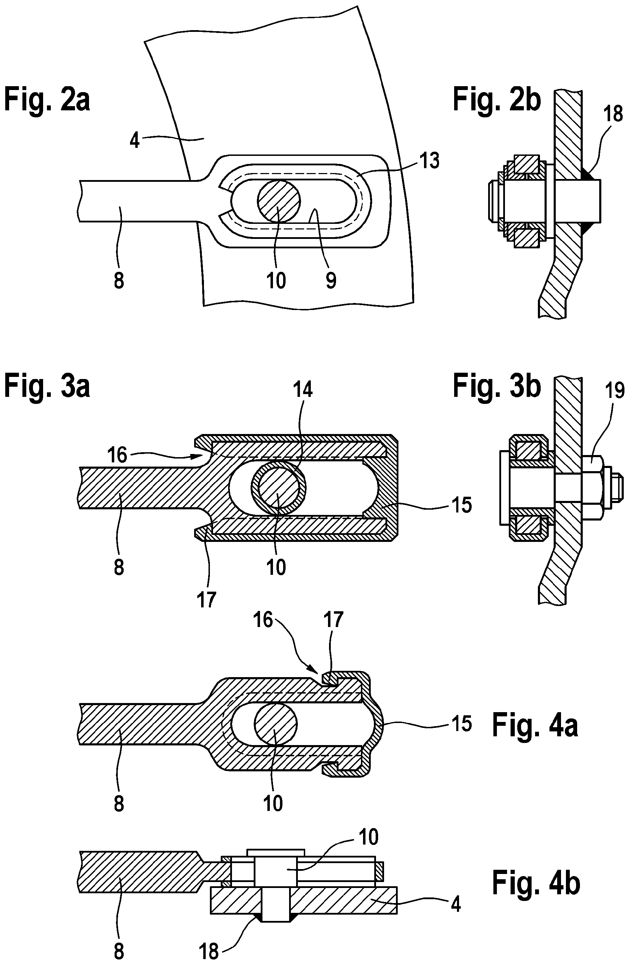

Bei dem in Fig. 2a, b dargestellten ersten Beispiel des Erfindungsgegenstandes ist die vorhin genannte Längsführungsöffnung 9 des Kolbenstangenkopfes 8 mit einer Auskleidung 13 aus gleitfähigem Kunststoff versehen, die die zwischen dem Kolbenstangenkopf 8 und dem Bolzen 10 bei deren Relativbewegung zueinander auftretende Reibung minimiert.

Bei den in den Fig. 3a, b und 4a, b dargestellten Ausführungen der Erfindung ist der Bolzen 10 in seinem im Kolbenstangenkopf 8 geführten Bereich mit einer Schicht 14 aus gleitfähigem Werkstoff versehen. Der Kolbenstangenkopf 8 ist dabei als ein den Bolzen 10 teilweise umgreifender, offener Gabelkopf ausgeführt, der an seinem offenen Ende mit einem Verschlussteil 15 versehen ist, das mit dem Gabelkopf formschlüssig, beispielsweise mittels einer Einrastverbindung 16 verbunden ist. Zu diesem Zweck weist das Verschlussteil 15 Rastvorsprünge 17 auf, die am Gabelkopf 8 ausgebildete, entsprechend geformte Flächen hintergreifen. Der Bolzen 10 kann mit dem Bremspedal 4 durch eine Schweissverbindung 18 (Fig. 2b, 4b) fest verbunden oder am Bremspedal 4 durch eine selbsthemmende Gewindemutter 19 (Fig. 3b) befestigt werden.

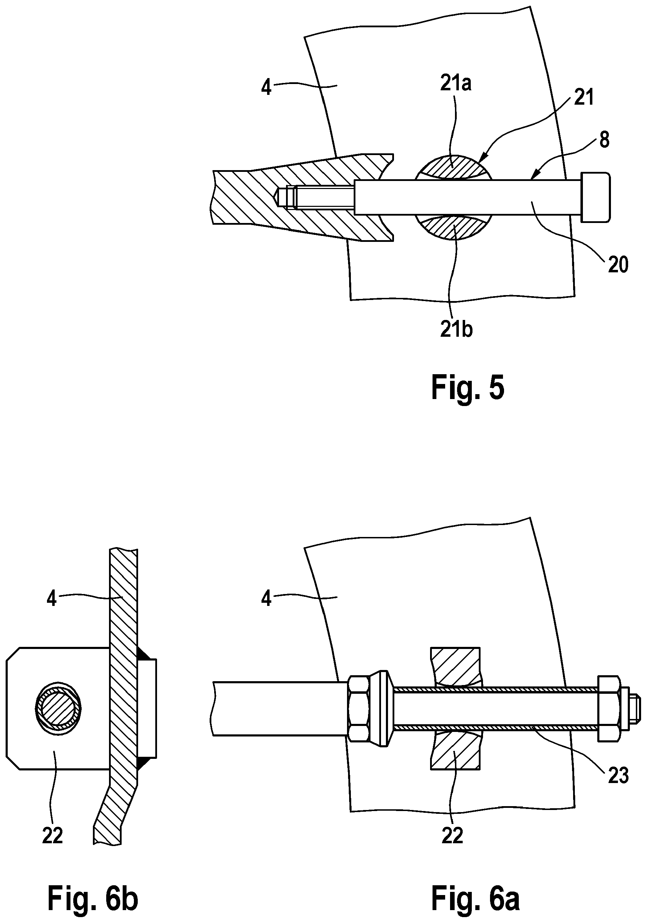

Bei den weiteren, in den Fig. 5 und 6 dargestellten Ausführungen der Erfindung ist der der Kolbenstangenkopf 8 als ein axialer Bolzen 20 ausgebildet, der in einer am Bremspedal 4 angeordneten Führung 21, 22 geführt ist. Bei der in Fig. 5 gezeigten Ausführungsform ist die Führung 21 durch zwei gegenüber liegende Gleitsegmente 21a, b gebildet, während der Bolzen 20 bei der in Fig. 6 dargestellten Variante mit einer Gleitschicht 23 versehen ist. Wie insbesondere Fig. 6b zu entnehmen ist, ist die Führung 22 mit dem Bremspedal 4 verschweißt.

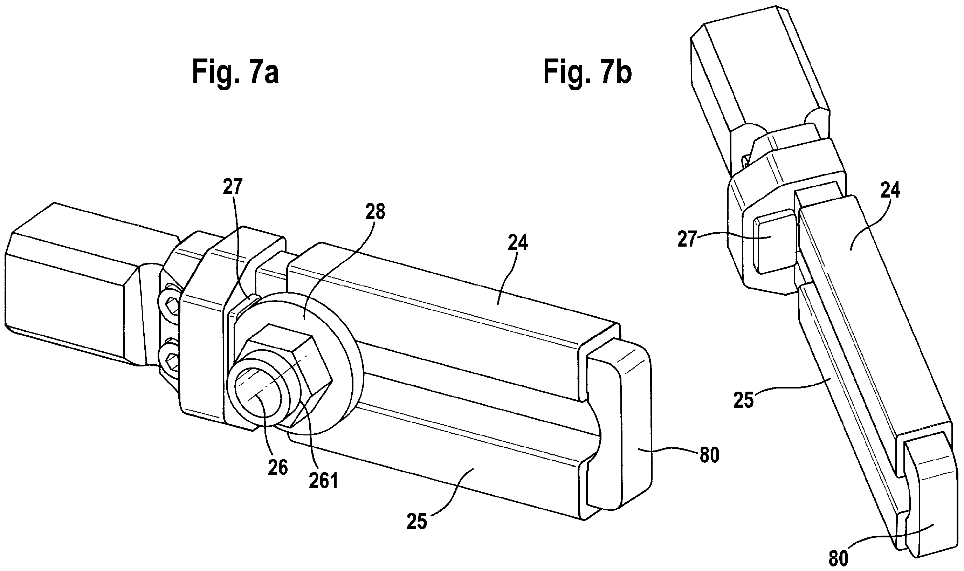

Bei der in Fig. 7a, b gezeigten weiteren Variante ist der einarmige Kolbenstangenkopf 80 mit Gleitflächen 24, 25 versehen, die aus geeignetem Kunststoff bestehen, mit dem der Kolbenstangenkopf 8 in seinen den lediglich angedeuteten Bolzen 26 führenden Bereichen umspritzt ist. Der Dämpfung des Bremspedalanschlags dient ein Dämpfungselement 27, das an dem dem nicht gezeigten Bremspedal abgewandten Ende des Kolbenstangenkopfes 80 angeordnet ist und an dem am Ende des Betätigungsweges ein radialer Kragen 28 des Bolzens 26 mit einem größeren Durchmesser anschlägt. Zur Sicherung des Bolzens 26 ist eine Gewindemutter 261 vorgesehen.

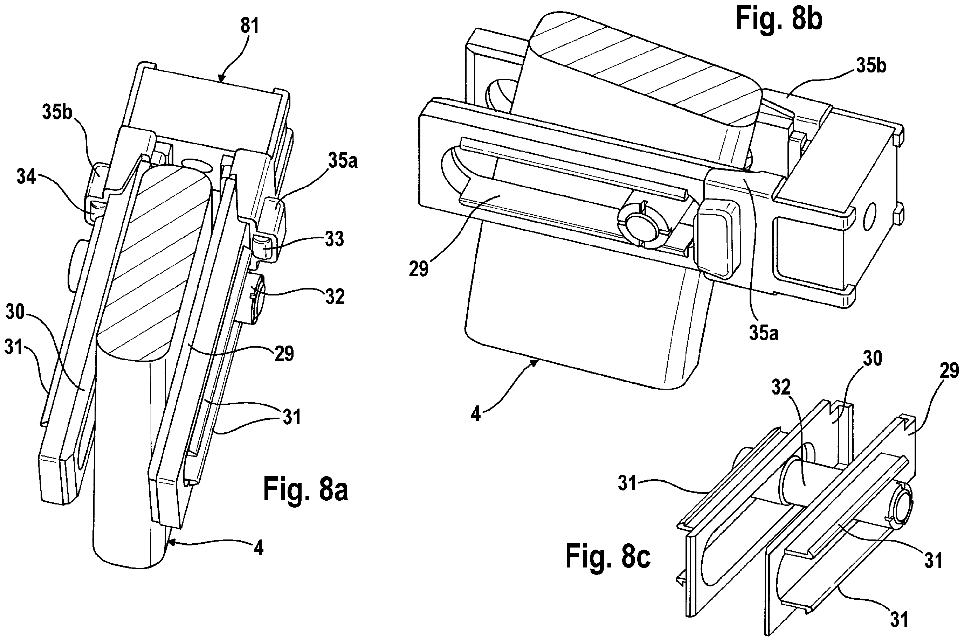

Bei der in Fig. 8a - c dargestellten Ausführung ist der Kolbenstangenkopf 81 als ein zweiarmiger Gabelkopf ausgebildet, der als Frästeil ausgeführt ist. Es ist jedoch auch denkbar, den Gabelkopf als ein Schweißbiegeteil auszubilden. Zum Verringern der vorhin genannten Reibung sind Gleitschuhe 29, 30 vorgesehen, die von innen am Gabelkopf montierbar sind und mit diesem durch eine formschlüssige Verbindung, beispielsweise mittels Einrastelemente 31, verbunden sind. Die dem Bremspedal 4 zugewandten Flächen der erwähnten Gleitschuhe 29, 30 gewährleisten bei der Betätigung eine wirksame Führung des Bremspedals 4. Bei der gezeigten Variante ist der Bolzen 32 zwei- oder mehrteilig ausgebildet, wobei sein Anschlag am Gabelkopf durch elastische Dämpfungselemente 33, 34 gedämpft wird, die mittels Halteteile 35a, 35b gehalten werden. Alternativ kann ein einziges, nicht dargestelltes Dämpfungselement im vorderen Bereich des Gabelkopfes 81 zwischen dessen Armen angeordnet werden.

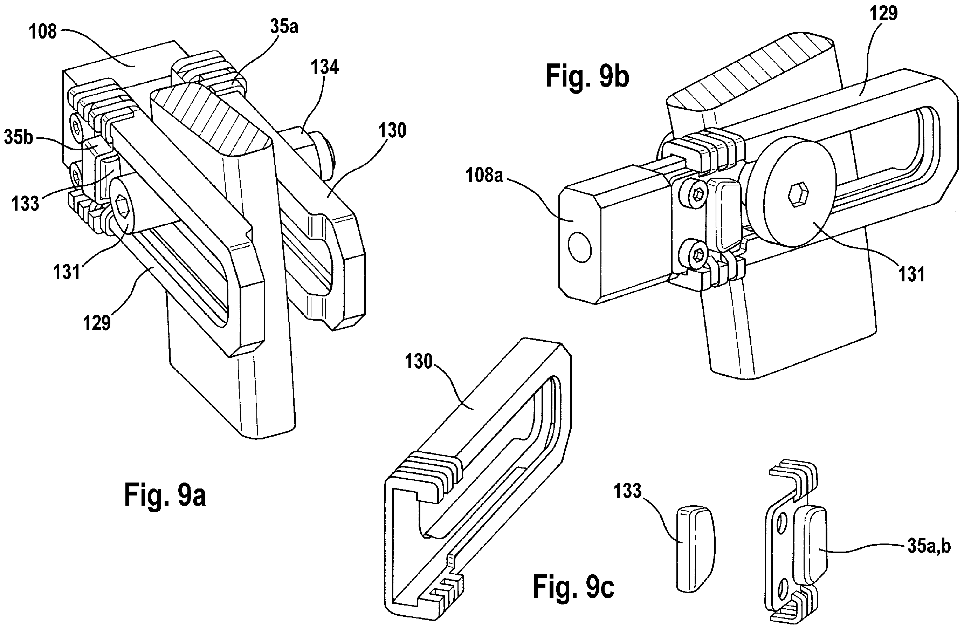

Bei dem in Fig. 9a - c gezeigten Ausführungsbeispiel sind die Gleitschuhe 129, 130 auf den Gabelkopf 108 aufgesteckt und werden mittels der im Zusammenhang mit Fig. 8a, b erwähnten Halteteile 35 gehalten, die auch elastische Dämpfungselemente 133, - zum Dämpfen des Anschlags des Bolzens 131 bzw. dessen Sicherungsmutter 134 halten und somit ihre Position am Ende des Gabelkopfes 108 festlegen. Während der in Fig. 9a dargestellte Gabelkopf 108 durch ein zweiarmiges Frästeil gebildet ist, ist der in Fig. 9b gezeigte Gabelkopf 108a einarmig ausgeführt. Fig. 9c zeigt Explosionsdarstellungen des Gleitschuhs 130, des Dämpfungselementes 133 sowie des Halteteiles 35a, b, die für beide Ausführungen des Gabelkopfes 108, 108a verwendbar sind. Durch eine Rasterung der Gleitschuhe 129, 130 hann das Halteteil 35 versetzt werden und passt sich so an die Größe des Bolzens 131 a.

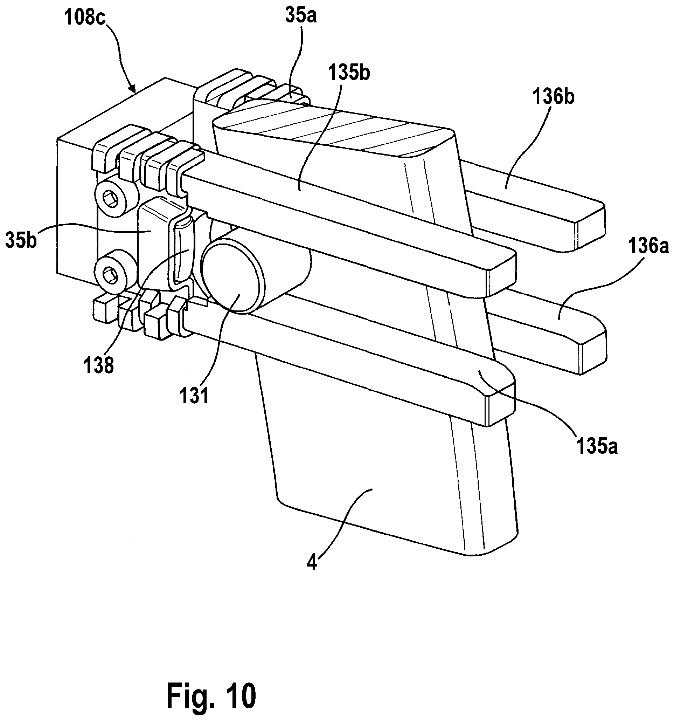

Der Aufbau des in Fig. 10 dargestellten neunten Ausführungsbeispiels des Erfindungsgegenstandes entspricht weitgehend dem der Ausführung, die in Fig. 9a gezeigt ist. Der Hauptunterschied zwischen den genannten beiden Ausführungen liegt in der Ausbildung des Gabelkopfes, der bei der Ausführung gemäß Fig. 10 als am Ende offener Gabelkopf 108c ausgebildet ist, auf dessen Arme hülsenartige Gleitschuhe 135a, b, 136a, b aufgesteckt sind, die mittels der Halteelemente 35a, b für Dämpfungselemente -, 138, gehalten werden. Die erwähnten Gleitschuhe können selbstverständlich auch durch Umspritzen des Gabelkopfes 108c mit geeignetem Kunststoff gefertigt werden.

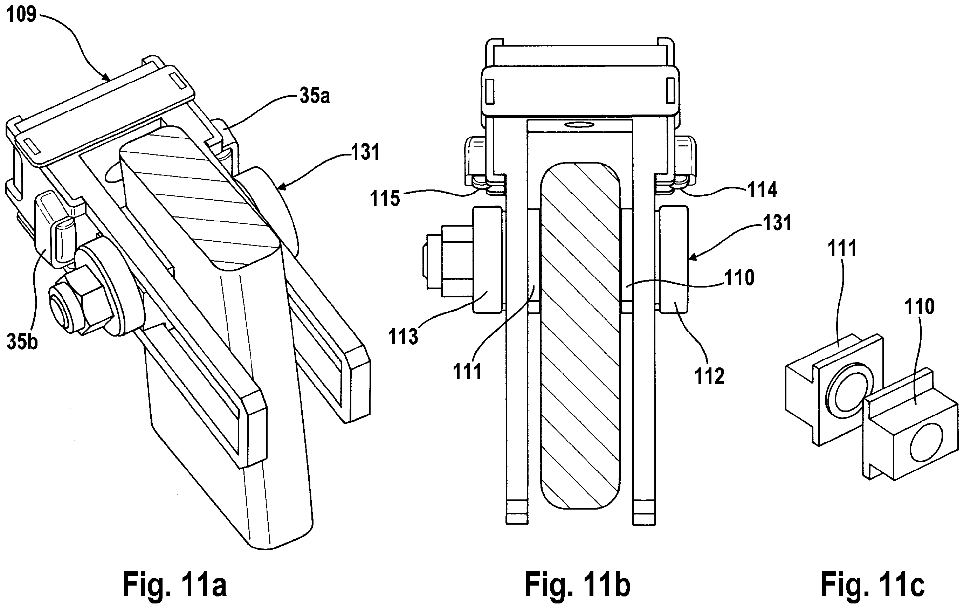

Schließlich ist bei der in Fig. 11a, b, c gezeigten zehnten Ausführung der an seinem Ende geschlossene Gabelkopf 109 als ein zweiarmiges Frästeil ausgebildet, in dessen gegenüber liegenden Längsöffnungen Gleitsteine 110, 111 geführt werden, die an den Enden des Bolzens 131 angeordnet sind. Die außerhalb des Gabelkopfes 109 liegenden Teile 112, 113 des Bolzens 132 wirken, wie bei den vorher gehenden Beispielen, mit Dämpfungselementen 114, 115 zusammen. Alternativ können dem Anschlag des Bremspedals 4 auch die entsprechend geformten Gleitsteine 110, 111 dienen.

## Patentansprüche

1. Bremskraftverstärker für eine Kraftfahrzeugbremsanlage vom Typ "Brake-by-wire", der einerseits mittels eines Bremspedals und andererseits fahrerwunschabhängig sowie unabhängig vom Fahrerwillen mittels einer elektronischen Steuereinheit betätigbar ist, wobei die Ankopplung des Bremspedals oder eines mit dem Bremspedal fest verbundenen Kraftübertragungsteil an einem Eingangsglied des Bremskraftverstärkers derart ausgeführt ist, dass eine begrenzte Relativbewegung des Bremspedals bzw. des mit dem Bremspedal fest verbundenen Kraftübertragungsteiles gegenüber dem Eingangsglied möglich ist, wodurch insbesondere in der Betriebsart "Brake-by-wire" eine Entkopplung der kraftübertragenden Verbindung zwischen dem Bremspedal oder dem mit dem Bremspedal fest verbundenen Kraftübertragungsteil gewährleistet wird, wobei das mit dem Bremspedal (4) fest verbundene Kraftübertragungsteil (10) und/oder das Eingangsglied (7) des Bremskraftverstärkers (1) im Bereich der Relativbewegung der beiden Teile (10, 7) zueinander mit Mitteln versehen ist/sind, die eine bei der Relativbewegung der Teile (10, 7) zueinander entstehende Reibung verringern und **dadurch gekennzeichnet, dass** das Eingangsglied (7; 26; 32; 131) am Ende des Bewegungsbereichs des Bremspedals (4) oder des mit dem Bremspedal (4) fest verbundenen Kraftübertragungsteiles (10) mindestens ein elastisches Dämpfungselement (27, 33, 34, 133, 138, 114, 115) aufweist.

2. Bremskraftverstärker nach Anspruch 1 **dadurch gekennzeichnet, dass** das Eingangsglied (7) des Bremskraftverstärkers (1) an seinem dem Bremspedal (4) zugewandten Ende einen mit einer Längsführungsöffnung (9) versehenen Kolbenstangenkopf (8) aufweist, wobei das Kraftübertragungsteil (10) durch einen in der Längsführungsöffnung (9) geführten Bolzen gebildet ist.

3. Bremskraftverstärker nach Anspruch 2 **dadurch gekennzeichnet, dass** die Längsführungsöffnung (9) mit einer Kunststoffauskleidung bzw. Ummantelung und/oder der Bolzen (10; 20) mit einer Kunststoffummantelung (23) versehen sind/ist.

4. Bremskraftverstärker nach einem der Ansprüche 1 bis 3 **dadurch gekennzeichnet, dass** der Kolbenstangenkopf (8) als ein den Bolzen (10) mindestens teilweise umgreifender Gabelkopf ausgeführt ist.

5. Bremskraftverstärker nach Anspruch 4 **dadurch gekennzeichnet, dass** der Gabelkopf (8) an seinem dem Bremspedal (4) zugewandten Ende offen ausgeführt ist und mittels eines Verschlussteiles (15) verschlossen ist, der mit dem Gabelkopf (8) formschlüssig verbunden ist.

6. Bremskraftverstärker nach Anspruch 4 **dadurch gekennzeichnet, dass** der Gabelkopf (80) einarmig ausgeführt ist und in seinem den Bolzen (26) führenden Bereich mit gegenüber angeordneten Gleitschuhen (24, 25) versehen ist, die durch Umspritzen des Gabelkopfes (80) mit Kunststoff gebildet werden.

7. Bremskraftverstärker nach Anspruch 4 **dadurch gekennzeichnet, dass** der Gabelkopf (81) zweiarmig ausgeführt ist und in seinem den Bolzen (32) führenden Bereich gegenüber angeordnete Gleitschuhe (29, 30) aufweist, die von innen montierbar sind und an dem Gabelkopf (81) mittels einer formschlüssigen Verbindung (31) befestigt sind.

8. Bremskraftverstärker nach Anspruch 4 **dadurch gekennzeichnet, dass** der Gabelkopf (108, 108a) ein- oder (108a) zweiarmig (108) ausgeführt ist und in seinem den Bolzen (131) führenden Bereich einen (129) oder zwei gegenüber angeordnete Gleitschuhe (129, 130) aufweist, die auf den bzw. die Arme des Gabelkopfes (108, 108a) aufgesteckt sind und mittels Halteteile (35, -) gehalten werden.

9. Bremskraftverstärker nach Anspruch 8 **dadurch gekennzeichnet, dass** der Gabelkopf (108c) an seinem dem Bremspedal zugewandten Ende offen ausgeführt ist.

10. Bremskraftverstärker nach Anspruch 1 und 8 **dadurch gekennzeichnet, dass** die Halteteile (35a, b) die elastischen Dämpfungselemente (114, 115, 133, 138) zum Dämpfen des Anschlags des Bolzens (131) aufnehmen.

11. Bremskraftverstärker nach Anspruch 4 **dadurch gekennzeichnet, dass** der Gabelkopf (109) zweiarmig ausgeführt ist und der Bolzen (131) mit Gleitsteinen (110, 111) versehen ist, die in den Längsführungsöffnungen im Gabelkopf (109) geführt sind.

12. Bremskraftverstärker nach Anspruch 1 **dadurch gekennzeichnet, dass** der Kolbenstangenkopf (8) als ein axialer Bolzen (20) ausgebildet ist, der in einer am Bremspedal (4) ausgebildeten Gleitführung (21, 22) geführt ist.

## Claims

1. Brake booster for a motor vehicle brake system of "brake-by-wire" type, which is actuatable on the one hand by means of a brake pedal and on the other hand, in a manner dependent on the driver demand and independently of the driver demand, by means of an electronic control unit, wherein the coupling of the brake pedal or of a force transmission part fixedly connected to the brake pedal to an input element of the brake booster is designed such that a limited relative movement of the brake pedal or of the force transmission part fixedly connected to the brake pedal relative to the input element is possible, whereby, in particular in the "brake-by-wire" operating mode, a decoupling of the force-transmitting connection between the brake pedal or the force transmission part fixedly connected to the brake pedal is ensured, wherein the force transmission part (10) fixedly connected to the brake pedal (4) and/or the input element (7) of the brake booster (1) is/are, in the region of the relative movement of the two parts (10, 7) with respect to one another, equipped with means which reduce friction that arises during the relative movement of the parts (10, 7) with respect to one another and **characterized in that** the input element (7; 26; 32; 131) has at least one elastic damping element (27, 33, 34, 133, 138, 114, 115) at the end of the movement range of the brake pedal (4) or of the force transmission part (10) fixedly connected to the brake pedal (4).

2. Brake booster according to Claim 1, **characterized in that** the input element (7) of the brake booster (1) has, on its end facing toward the brake pedal (4), a piston rod head (8) equipped with a longitudinal guide opening (9), wherein the force transmission part (10) is formed by a bolt which is guided in the longitudinal guide opening (9).

3. Brake booster according to Claim 2, **characterized in that** the longitudinal guide opening (9) is equipped with a plastics lining or coating and/or the bolt (10; 20) is equipped with a plastics coating (23).

4. Brake booster according to one of Claims 1 to 3, **characterized in that** the piston rod head (8) is designed as a fork head which at least partially engages around the bolt (10).

5. Brake booster according to Claim 4, **characterized in that** the fork head (8) is designed to be open at its end facing toward the brake pedal (4) and is closed by means of a closure part (15) which is connected in positively locking fashion to the fork head (8).

6. Brake booster according to Claim 4, **characterized in that** the fork head (80) is of single-arm design and, in its region that guides the bolt (26), is equipped with oppositely arranged slide shoes (24, 25) which are formed by overmoulding of the fork head (80) with plastic.

7. Brake booster according to Claim 4, **characterized in that** the fork head (81) is of two-arm design and, in its region that guides the bolt (32), has oppositely arranged slide shoes (29, 30) which can be installed from the inside and which are fastened to the fork head (81) by means of a positively locking connection (31).

8. Brake booster according to Claim 4, **characterized in that** the fork head (108, 108a) is of single-arm (108a) or two-arm (108) design and, in its region that guides the bolt (131), has one (129) or two oppositely arranged slide shoes (129, 130) which are fitted onto the one or more arms of the fork head (108, 108a) and are held by means of holding parts (35, -).

9. Brake booster according to Claim 8, **characterized in that** the fork head (108c) is designed to be open at its end facing toward the brake pedal.

10. Brake booster according to Claim 1 and 8, **characterized in that** the holding parts (35a, b) receive the elastic damping elements (114, 115, 133, 138) for the damping of the abutment of the bolt (131) .

11. Brake booster according to Claim 4, **characterized in that** the fork head (109) is of two-arm design and the bolt (131) is equipped with slide blocks (110, 111) which are guided in the longitudinal guide openings in the fork head (109).

12. Brake booster according to Claim 1, **characterized in that** the piston rod head (8) is formed as an axial bolt (20) which is guided in a sliding guide (21, 22) formed on the brake pedal (4).

## Revendications

1. Servofrein pour une installation de freinage de véhicule automobile du type "Brake-by-wire", qui peut être actionné d'une part au moyen d'une pédale de frein et d'autre part selon le souhait du conducteur ou indépendamment de la volonté du conducteur au moyen d'une unité de commande électronique, dans lequel le couplage de la pédale de frein ou d'une pièce de transmission de force solidaire de la pédale de frein à un organe d'entrée du servofrein est réalisé de telle manière qu'un mouvement relatif limité de la pédale de frein ou de la pièce de transmission de force solidaire de la pédale de frein par rapport à l'organe d'entrée soit possible, ce qui garantit en particulier dans le mode de fonctionnement "Brake-by-wire" une coupure de la liaison de transmission de force entre la pédale de frein ou la pièce solidaire de la pédale de frein, dans lequel la pièce de transmission de force (10) solidaire de la pédale de frein (4) et/ou l'organe d'entrée (7) du servofrein (1) est/sont dotée(s), dans la zone du mouvement relatif des deux pièces (10, 7), de moyens qui réduisent un frottement apparaissant lors du mouvement relatif des pièces (10, 7), et **caractérisé en ce que** l'organe d'entrée (7; 26; 32; 131) présente au moins un élément d'amortissement élastique (27, 33, 34, 133, 138, 114, 115) à l'extrémité de la zone de mouvement de la pédale de frein (4) ou de la pièce de transmission de force (10) solidaire de la pédale de frein (4).

2. Servofrein selon la revendication 1, **caractérisé en ce que** l'organe d'entrée (7) du servofrein (1) présente à son extrémité tournée vers la pédale de frein (4) une tête de tige de piston (8) dotée d'une ouverture de guidage longitudinal (9), dans lequel la pièce de transmission de force (10) est formée par un axe guidé dans l'ouverture de guidage longitudinal (9).

3. Servofrein selon la revendication 2, **caractérisé en ce que** l'ouverture de guidage longitudinal (9) est munie d'un revêtement ou d'une gaine en matière plastique et/ou l'axe (10; 20) est muni d'une gaine en matière plastique (23) .

4. Servofrein selon l'une quelconque des revendications 1 à 3, **caractérisé en ce que** la tête de tige de piston (8) est réalisée sous la forme d'une tête de fourche entourant au moins partiellement l'axe (10).

5. Servofrein selon la revendication 4, **caractérisé en ce que** la tête de fourche (8) est ouverte à son extrémité tournée vers la pédale de frein (4) et est fermée au moyen d'une pièce de fermeture (15), qui est assemblée par emboîtement à la tête de fourche (8).

6. Servofrein selon la revendication 4, **caractérisé en ce que** la tête de fourche (80) est réalisée avec un seul bras et est dotée dans sa région guidant l'axe (26) de sabots de glissement (24, 25) disposés l'un en face de l'autre, qui sont formés par enrobage de la tête de fourche (80) par projection de matière plastique.

7. Servofrein selon la revendication 4, **caractérisé en ce que** la tête de fourche (81) est réalisée avec deux bras et présente dans sa région guidant l'axe (32) des sabots de glissement disposés l'un en face de l'autre, qui peuvent être montés par l'intérieur et qui sont fixés à la tête de fourche (81) au moyen d'un assemblage par emboîtement (31).

8. Servofrein selon la revendication 4, **caractérisé en ce que** la tête de fourche (108, 108a) est réalisée avec un bras (108a) ou deux bras (108) et présente dans sa région guidant l'axe (131) un (129) ou deux sabots de glissement (129, 130) disposés l'un en face de l'autre, qui sont engagés sur le ou les bras de la tête de fourche (108, 108a) et qui sont maintenus au moyen de pièces de maintien (35, -).

9. Servofrein selon la revendication 8, **caractérisé en ce que** la tête de fourche (108c) est ouverte à son extrémité tournée vers la pédale de frein.

10. Servofrein selon la revendication 1 et 8, **caractérisé en ce que** les pièces de maintien (35a, b) comprennent les éléments d'amortissement élastiques (114, 115, 133, 138) destinés à amortir la butée de l'axe (131) .

11. Servofrein selon la revendication 4, **caractérisé en ce que** la tête de fourche (109) est réalisée avec deux bras et l'axe (131) est muni de sabots de glissement (110, 111), qui sont guidés dans les ouvertures de guidage longitudinal dans la tête de fourche (109).

12. Servofrein selon la revendication 1, **caractérisé en ce que** la tête de tige de piston (8) est réalisée sous la forme d'un boulon axial (20), qui est guidé dans un guide de glissement (21, 22) formé sur la pédale de frein (4) .
